# EUROPEAN PATENT APPLICATION

(11) **EP 0 937 529 A1**
(43) Date of publication of application: **25.08.1999**
(21) Application number: 99200512.4
(22) Date of filing: 23.02.1999
(51) Int. Cl.: B23K 9/04

(54) **Method and apparatus for reconditionig guard or guide rail elements**

(30) Priority: 24.02.1998 NL 1008403
(71) Applicant: de Munter, Anthony John, 6953 AB Dieren (NL)
(72) Inventor: de Munter, Anthony John, 6953 AB Dieren (NL)
(74) Representative: Ottevangers, Sietse Ulbe

(57) **Abstract**

A method for reconditioning a guard or guide rail element, wherein in a first method step the shape of the guard or guide rail element is restored, wherein in a second method step the guard or guide rail element is blasted, and wherein in a third method step at least one coating layer is applied.

An assembly for reconditioning a guard or guide rail element, comprising a rolling or pressing device, a blasting device, a coating applying device, a brushing device and a conveying device for conveying the guard or guide rail element along the above-mentioned devices.

## Description

Guard or guide rails arranged along roads and motorways have to be replaced after a number of years so as to bring the guard or guide rails into a new condition again. The guard or guide rails now being used are generally provided with a supporting structure and guard or guide rail elements. Each guard or guide rail element is generally designed as a profiled plate section. The guard or guide rail elements are often galvanised. After a number of years the zinc coating has eroded away and corrosion of the guard or guide rail occurs. Moreover, the guard rails have sustained damage in different places, which ruins the appearance of the guard rails. Besides, such damage will sooner lead to corrosion, which weakens or destroys the guard function of the guard or guide rails. Furthermore, the zinc coating is ecologically harmful, which is undesirable.

When the guard or guide rails are now replaced, the guard or guide rail elements are often scrapped and new guard or guide rail elements are disposed, optionally on the existing supporting structure of the guard or guide rails. It is clear that this is a very expensive affair, since the guard or guide rail elements serving for replacement are made new. Moreover, the manufacture of the new guard or guide rail elements costs a great deal of energy, which is ecologically very harmful.

The object of the invention is to provide a solution to these problems, for which purpose the invention provides a method for reconditioning a guard or guide rail element, wherein in a first method step the shape of the guard or guide rail element is restored, wherein in a second method step the guard or guide rail element is blasted, and wherein in a third method step at least one coating layer is applied.

Although the individual method steps are known per se for other uses, the special successive combination of these method steps for reconditioning guard or guide rail elements is absolutely new.

Since up to now the guard or guide rail elements are often scrapped and replaced by new elements, this branch of industry is still insufficiently aware that instead of replacement reconditioning of the guard or guide rail elements is a possibility to bring the guard or guide rails into a new condition again. The invention is therefore based on the insight that practically new guard rails can be obtained by reconditioning the existing guard or guide rail elements.

To further improve the appearance of the guard or guide rail element after the coating process, the coated guard or guide rail element can be brushed according to a further elaboration of the invention in a fourth method step.

To obtain an optimum adhesion of the coating, first a primer layer and then a top layer can be applied in the third method step. The primer layer may, for instance, be formed from a nickel-aluminium alloy or a molybdenum alloy. The top layer may, for instance, be formed from an aluminium-silicon alloy, an aluminium-magnesium alloy or from pure aluminium. The coating layers may be applied by known per se techniques, such as flame arc spraying or autogenous flame spraying.

The shape restoration realised in the first method step may take place by means of a press or continuously by means of profile rolls. Such a set of profile rolls will be provided with a profile substantially corresponding to the intended end profile of the guard or guide rail element.

Preferably, the blasting operation is continued in the second method step until a blasting purity of about SA 2.5 and a blasting roughness of about 80 to 120 microns has been reached. After such a blasting operation the surface of the guard or guide rail element is eminently suited for applying the coating layer so that an excellent adhesion between the guard or guide rail element and the coating layers is obtained. This leads to a very high durability of the guard or guide rail elements.

The brushing operation in the fourth method step is preferably carried out with profile brushes provided with brass bristles. With such brushes a fine surface quality of the reconditioned guard or guide rail element is obtained.

The invention also relates to an assembly for reconditioning a guard or guide rail element, which apparatus comprises a rolling or pressing device, a blasting device, a coating applying device, a brushing device and a conveying device for conveying the guard or guide rail element along the above-mentioned devices. It is self-evident that it is preferable that the arrangement of the different devices of the assembly is such that the conveying device can convey the guard or guide rail elements via the shortest route successively along the rolling or pressing device, the blasting device, the coating applying device and the brushing device.

According to a further elaboration of the invention it is preferable to arrange the conveying device at least at the coating applying device for conveying the guard or guide rail elements in two longitudinal directions and at least one transverse direction so that a uniform coating layer can be applied.

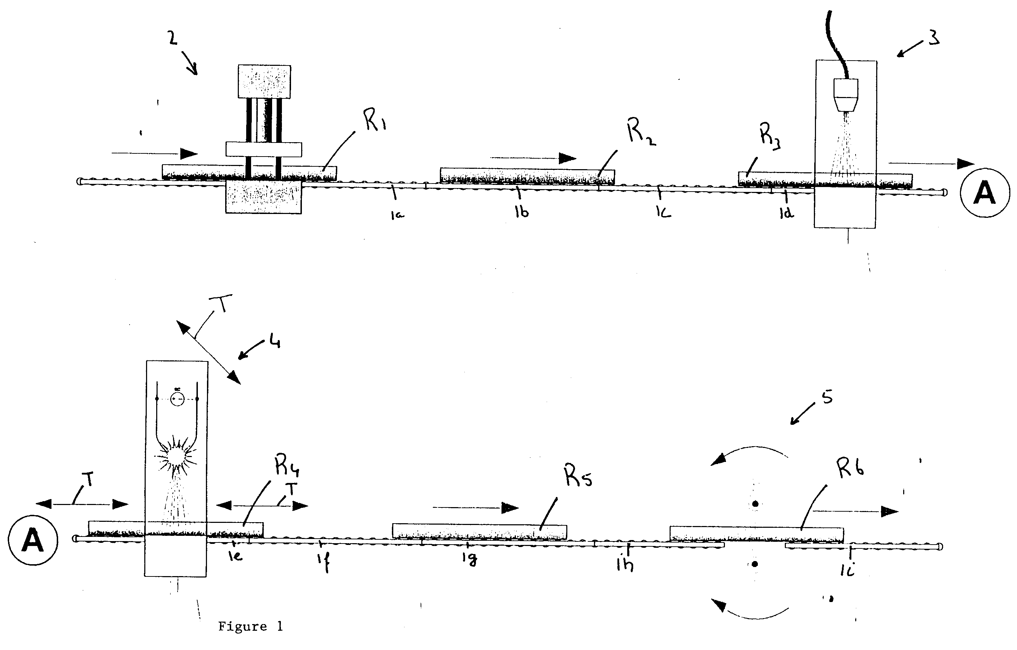

The invention will hereinafter be explained by means of a practical example shown in the drawing and only serving to illustrate a possible embodiment of the assembly according to the invention.

The drawing shows a conveying system 1 built up from different parts 1a-1i. For clarity's sake, the conveying system is divided in the drawing in two. It is clear, however, that the conveying system is arranged in a line and that the parts 1d and 1e connect to each other at the positions indicated by A. On the conveying system a number of guard or guide rail elements R1-R6 is shown. R1 is at a device 2 for the shape restoration of the guard rail element. This device may, for instance, be a press or roll. R2 is conveyed from the press or roll 2 to a blasting device 3. The guard rail element R3 is partly in the blasting device 3 where the guard rail element R3 is blasted to obtain a surface suitable for applying coating layers. The guard rail element R4 is in a coating applying device 4, which is designed in the present practical example as a flame arc spray coating device provided with at least one spray nozzle. Such a flame arc spraying device is, for instance, described in US-A-4,624,410.

As clearly indicated by the arrows T, the conveying device 1 is arranged at the flame arc spraying device for conveyance in two longitudinal directions and at least one transverse direction so that coating layers can be applied uniformly. It is preferable for quality reasons to effect the movement in transverse direction by means of a CNC controlled arrangement. For the same quality reasons a triaxial CNC control per spray nozzle provides a substantial improvement. In this arrangement the same coating applying device is used for each layer to be applied. It is self-evident that it is also possible to arrange two coating applying devices behind each other, thereby eliminating the need of changing over the machine from one coating material to another. Such an assembly provided with two coating applying devices can carry out the process for reconditioning the guard or guide rail elements in a more continuous manner. Subsequently, the guard or guide rail element is conveyed to a brushing device 5. The guard rail element R5 is in that conveying phase after which the brushing operation is carried out by the brushing device 5, which is the case in the drawing with the guard rail element R6.

It is clear that the invention is not limited to the practical example described but that various modifications are possible within the scope of the invention.

## Claims

1. A method for reconditioning a guard or guide rail element (R1-R6), wherein in a first method step the shape of the guard or guide rail element is restored, wherein in a second method step the guard or guide rail element is blasted, and wherein in a third method step at least one coating layer is applied.

2. A method according to claim 1, characterised in that in a fourth method step the coated guard or-guide rail element (R1-R6) is brushed.

3. A method according to claim 1 or 2, characterised in that in the third method step first a primer layer and then a top layer is applied.

4. A method according to claim 3, characterised in that the primer layer is formed from a nickel-aluminium alloy or a molybdenum alloy and that the top layer is formed from an aluminium-silicon alloy, an aluminium-magnesium alloy or from pure aluminium.

5. A method according to any one of claims 1-4, characterised in that the coating layers are applied by means of flame arc spraying.

6. A method according to any one of claims 1-4, characterised in that the coating layers are applied by means of autogenous flame spraying.

7. A method according to any one of the preceding claims, characterised in that in the first method step the shape is restored by means of a press (2).

8. A method according to any one of claims 1-6, characterised in that in the first method step the shape is restored by means of a set of profile rolls.

9. A method according to any one of the preceding claims, characterised in that in the second method step the blasting operation is continued until a blasting purity of about SA 2.5 and a blasting roughness of about 80 to 120 microns has been reached.

10. A method according to at least claim 2, characterised in that the brushes are profile brushes provided with brass bristles.

11. An assembly for reconditioning a guard or guide rail element, comprising a rolling or pressing device (2), a blasting device (3), a coating applying device (4), a brushing device (5) and a conveying device for conveying the guard or guide rail element (R1-R6) along the above-mentioned devices (2-5).

12. An assembly according to claim 11, characterised in that the conveying device (1e) is arranged at least at the coating applying device (4) for conveying the guard or guide rail elements (R1-R6) in two longitudinal directions and at least one transverse direction so that a uniform coating can be applied.
